# EUROPÄISCHE PATENTSCHRIFT

(11) **EP 3 928 954 B1**
(45) Veröffentlichungstag und Bekanntmachung des Hinweises auf die Patenterteilung: **29.03.2023**
(21) Anmeldenummer: 21180557.7
(22) Anmeldetag: 21.06.2021
(51) Int. Cl.: B29C 49/64, B29C 49/06, B29K 67/00, B29L 31/00

(54) **VORRICHTUNG UND VERFAHREN ZUM ERWÄRMEN VON KUNSTSTOFFVORFORMLINGEN MIT VERSTELLBARER FOKUSSIEREINRICHTUNG**
METHOD AND DEVICE FOR HEATING PLASTIC PRE-FORMS WITH ADJUSTABLE FOCUSSING DEVICE
DISPOSITIF ET PROCÉDÉ DE CHAUFFAGE DES PRÉFORMES EN MATIÈRE PLASTIQUE COMPORTANT UN DISPOSITIF DE MISE AU POINT RÉGLABLE

(30) Priorität: 24.06.2020 DE 102020116681
(43) Veröffentlichungstag der Anmeldung: 29.12.2021
(73) Patentinhaber: KRONES AG, 93073 Neutraubling (DE)
(72) Erfinder: Eifler, Michael, 93073 Neutraubling (DE); Schönberger, Wolfgang, 93073 Neutraubling (DE); Moewes, Simon, 93073 Neutraubling (DE)
(74) Vertreter: Bittner, Bernhard

(56) Entgegenhaltungen:
- DE-A1- 19 724 621
- DE-A1-102018 130 639
- FR-A1- 2 878 185
- US-A1- 2007 096 352

## Beschreibung

Die vorliegende Erfindung bezieht sich auf eine Vorrichtung in einem Verfahren zum Erwärmen von Kunststoffvorformlingen. Im Bereich der getränkeherstellenden Industrie ist es seit langem bekannt, dass Kunststoffvorformlinge erwärmt werden und anschließend in Umformungseinrichtungen wie beispielsweise Streckblasmaschinen zu Kunststoffbehältnissen, wie beispielsweise Kunststoffflaschen umgeformt werden. Bei dieser Erwärmung ist es auch bekannt, dass bestimmte Bereiche der Kunststoffvorformlinge nicht erwärmt werden sollen, wie beispielsweise die Mündungsbereiche, welche ein Gewinde zum Aufschrauben eines Verschlusses aufweisen. Zum Schutz dieser Bereiche sind zum Teil Abschirmelemente, sowie Abschirmplatten vorgesehen.

Derartige Vorrichtungen und Verfahren sind aus dem Stand der Technik bekannt,

Dokument US2007/096352A1 beschreibt eine thermische Überwachungs- und Steuerungseinrichtung zum Erwärmen von Kunststoffvorformlingen, wobei die Vorrichtung eine Vielzahl von Heizelementen aufweist, welche entlang eines Transportpfads der Vorformlinge angeordnet ist und die Vorformlinge mittels einer Transporteinrichtung durch die Einrichtung transportiert werden.

Weitere Vorrichtungen und Verfahren sind in den Dokumente FR2878185A1, DE19724621A1 und DE102018130639A1 beschrieben.

Dies bringt jedoch den Nachteil mit sich, dass die Bereiche unterhalb der nicht zu erwärmenden Bereiche, beispielsweise die Bereiche unterhalb eines Tragrings teilweise nicht ausreichend erwärmt werden und damit in der Folge nicht genügend Material aus diesen Bereichen verstreckt werden kann.

Daher sind aus dem Stand der Technik Fokussiereinrichtungen bekannt, welche die Erwärmungsstrahlung in diese Bereiche der Kunststoffvorformlinge fokussieren. So ist es beispielsweise bekannt, dass eine Erwärmung eines Kunststoffvorformlings unter dessen Tragrings mittels einer Fokussiereinrichtung, wie beispielsweise einer parabel- oder ellipsenartigen Fokussiereinrichtung übernimmt.

Dabei werden durch den Benutzer beziehungsweise den Maschinenbediener auch diese Fokussiereinrichtungen eingestellt, insbesondere auf den zu erwärmenden Bereich des Kunststoffvorformlings. Bei einer Umstellung auf andere Kunststoffvorformlinge ist daher auch im Stand der Technik manuell eine Änderung der Einstellung dieser Fokussiereinrichtung zu bewerkstelligen.

Ein Problem bei dieser Umstellung ist teilweise eine mangelnde Wiederholgenauigkeit durch ein manuelles Einstellen nach einem Wechsel. Aus diesem Grund kann auch der Heizprozess für einen bestimmten Kunststoffvorformling, beziehungsweise eine bestimmte Gattung an zu erwärmenden Kunststoffvorformlingen variieren. Dies kann zu Qualitätsschwankungen des Kundenprojekts führen. Daneben führt die manuelle Einstellung dieser Fokussiereinrichtung zu einer erhöhten Stillstandzeit.

Der vorliegenden Erfindung liegt daher die Aufgabe zugrunde, eine derartige Umstellung dieser Heizeinrichtungen insbesondere auch auf unterschiedliche zu erwärmende Kunststoffvorformlinge zu verbessern. Diese Aufgaben werden erfindungsgemäß durch eine Vorrichtung und ein Verfahren nach den unabhängigen Ansprüchen erreicht. Vorteilhafte Ausführungsformen und Weiterbildungen sind Gegenstand der Unteransprüche.

Eine erfindungsgemäße Vorrichtung zum Erwärmen von Kunststoffvorformlingen weist eine Transporteinrichtung auf, welche dazu geeignet und bestimmt ist, die Kunststoffvorformlinge entlang eines vorgegebenen Transportpfads zu transportieren. Daneben ist wenigstens eine stationär angeordnete Heizeinrichtung vorgesehen, welche die entlang des Transportpfads transportierten Kunststoffvorformlinge erwärmt. Dabei weist die Heizeinrichtung wenigstens ein Heizelement auf, welches eine die Kunststoffvorformlinge erwärmende Strahlung abgibt, sowie auch eine Fokussiereinrichtung, welche die von einem Heizelement abgegebene Strahlung auf vorgegebene Bereiche der zu erwärmenden Kunststoffvorformlinge fokussiert und/oder richtet.

Erfindungsgemäß ist eine Position dieser Fokussiereinrichtung veränderbar. Insbesondere ist dabei eine Position dieser Fokussiereinrichtung in Bezug auf den Transportpfad der Behältnisse und/oder eine Position der Kunststoffvorformlinge veränderbar.

Besonders bevorzugt ist diese Veränderbarkeit gegeben, um eine Anpassung an unterschiedliche Kunststoffvorformlinge zu erreichen.

Bei einer bevorzugten Ausführungsform handelt es sich bei dem Heizelement um einen Infrarotstrahler. Damit handelt es sich bei der hier erwähnten Strahlung insbesondere um Infrarotstrahlung, welche zum Erwärmen der Kunststoffvorformlingen eingesetzt wird. Im Arbeitsbetrieb werden die Kunststoffvorformlinge an diesem Heizelement vorbeigeführt.

Bei einer weiteren bevorzugten Ausführungsform erstreckt sich das, wenigstens eine, Heizelement entlang des Transportpfads.

Bei einer weiteren vorteilhaften Ausführungsform sind mehrere Heizelemente vorgesehen, welche besonders bevorzugt in einer Längsrichtung der zu erwärmenden Kunststoffvorformlingen übereinander angeordnet sind. Dabei können sich alle diese Heizelemente auch entlang des Transportpfads der Kunststoffvorformlinge erstrecken.

Dabei ist es möglich, dass einige dieser Heizelemente mit einer Fokussiereinrichtung ausgestattet sind und manche ohne eine entsprechende Fokussiereinrichtung.

Wie oben erwähnt, sollen bevorzugt nicht alle Bereiche der transportierten Kunststoffvorformlinge erwärmt werden. Insbesondere soll ein Mündungsbereich der Kunststoffvorformlinge nicht erwärmt werden. Zu diesem Zweck können Abschirmeinrichtungen vorgesehen sein, welche die Heizstrahlung der Heizelemente von den Mündungen der Kunststoffvorformlinge abschirmen.

Bei einer weiteren bevorzugten Ausführungsform transportiert die Transporteinrichtung die Kunststoffvorformlinge vereinzelt.

Bei einer weiteren bevorzugten Ausführungsform sind die Heizelemente seitlich neben dem Transportpfad der Kunststoffvorformlinge angeordnet. Auf diese Weise werden die Kunststoffvorformlinge an den Heizelementen vorbeigeführt und durch diese erwärmt. Bei einer weiteren bevorzugten Ausführungsform ist wenigstens eine Dreheinrichtung vorgesehen, welche die Kunststoffvorformlinge während ihrer Erwärmung dreht und insbesondere bezüglich deren Längsrichtungen dreht. Auf diese Weise kann eine gleichmäßige Erwärmung der Kunststoffvorformlinge in deren Umfangsrichtung erreicht werden. Dabei ist es möglich, dass diese Dreheinrichtung sämtliche Kunststoffvorformlinge einheitlich dreht, beispielsweise indem Zahnräder gegenüber einer Zahnstange ablaufen.

Bei einer weiteren bevorzugten Ausführungsform erstreckt sich die Fokussiereinrichtung ebenfalls entlang des Transportpfads der Kunststoffvorformlinge.

Bei einer weiteren bevorzugten Ausführungsform weist dieser Transportpfad der Kunststoffvorformlinge Bereiche mit unterschiedlichen Krümmungen auf. Besonders bevorzugt sind Bereiche vorgesehen, entlang deren die Kunststoffvorformlinge im Wesentlichen geradlinig geführt werden, sowie Bereiche, in denen diese entlang einer Krümmung geführt werden, beispielsweise in den umliegenden Bereichen der Erwärmungseinrichtung. Besonders bevorzugt sind die Heizeinrichtungen, insbesondere in den geradlinig verlaufenden Bereich der Vorrichtung angeordnet.

Wie oben erwähnt sind bevorzugt Abschirmeinrichtungen vorgesehen, welche die Heizstrahlung von bestimmten Bereichen der Kunststoffvorformlinge fernhalten. So können beispielsweise Abschirmplatten vorgesehen sein, welche die Heizstrahlung von den Mündungsbereichen der Kunststoffvorformlinge abschirmen. Dabei sind bevorzugt diese Abschirmeinrichtungen an einem Träger angeordnet, wobei an diesem Träger auch die Fokussiereinrichtung angeordnet ist. Die Abschirmeinrichtung könnten aber auch an anderen Bereichen der Vorrichtung angeordnet sein.

Bevorzugt wäre es damit möglich, dass auch die Abschirmeinrichtungen einstellbar sind und insbesondere auf unterschiedliche Gattungen an Kunststoffvorformlingen einstellbar sind.

Weiterhin wäre es auch möglich und bevorzugt, dass Abschirmeinrichtungen vorgesehen sind, die mit den Kunststoffvorformlingen mitbewegt werden.

Bei einer weiteren vorteilhaften Ausführungsform weist die Vorrichtung auch Strahlungsreflektor-Einrichtungen auf, welche dazu geeignet sind, die von den Heizelementen abgegebene Strahlung auf die Kunststoffvorformlinge zu reflektieren. So können beispielsweise Kachelelemente vorgesehen sein, welche die von den Heizelementen abgegebene Strahlung wiederum auf die Kunststoffvorformlinge reflektieren. So ist es beispielsweise möglich, dass bezüglich des Transportpfads des Kunststoffvorformlinge, gegenüber den Heizelementen und den Fokussiereinrichtungen derartige Reflektor-Einrichtungen vorgesehen sind.

Besonders bevorzugt weist die Vorrichtung eine Transportgasse auf, durch welche die Kunststoffvorformlinge während ihrer Erwärmung transportiert werden.

Bei einer weiteren bevorzugten Ausführungsform ist eine Vielzahl von den hier beschriebenen Heizelementen und/oder Heizeinrichtungen entlang des Transportpfads der Kunststoffvorformlinge angeordnet.

Bei einer weiteren bevorzugten Ausführungsform weist die Vorrichtung eine Vielzahl von Halteeinrichtungen auf, die zum Halten der Kunststoffvorformlingen geeignet und bestimmt sind. Dabei kann es sich insbesondere, aber nicht ausschließlich, um Haltedorne handeln, welche dazu geeignet sind, in den Mündungen der Kunststoffvorformlinge eingeführt zu werden, um diese zu halten.

Es wird daher eine automatisierte Einstellung der Fokussiereinrichtung auf die Kunststoffvorformlinge vorgeschlagen.

Für diese sind unterschiedliche Vorgehensweisen denkbar, wie unten genauer ausgeführt. So kann beispielsweise eine Verstellung automatisch durch eine Maschine durchgeführt werden, beispielsweise durch die Eingabe von Sortenparametern automatisiert.

Daneben ist es denkbar, dass eine derartige Verstellung zentral erfolgt, das heißt, dass mehrere Fokussiereinrichtungen eingestellt werden können. Dies kann beispielsweise über eine zentrale Eingabeeinrichtung erfolgen. Bei der Eingabeeinrichtung kann es sich beispielsweise um ein Bedienpanel handeln.

Daneben ist es auch möglich, dass bestimmte Verstellungen und/oder Positionen gespeichert werden, sodass bei Umstellung auf Kunststoffvorformlinge wieder auf bereits gespeicherte Einstellungen zurückgegriffen werden kann. So ist auch eine Verstellung, beispielsweise über ein Zählwerk nachvollziehbar und kann auch wiederholgenau, gegebenenfalls elektrisch, abgefragt und an eine Maschinensteuerung rückgemeldet werden.

Daneben ist es auch möglich, dass eine Einstellvorrichtung, insbesondere aber nicht ausschließlich, eine mechanische Einstellvorrichtung verwendet wird, um die ideale Position des Brennpunktes der Fokussiereinrichtung an dem jeweiligen Kunststoffvorformling zu finden.

Weiter ist es auch möglich, dass eine abnehmbare und/oder festmontierte, mechanische Vorrichtung vorgesehen ist, welche zum Einstellen der Fokussiereinrichtung dient.

Daneben kann auch, wie unten genauer aufgeführt, als Einstellvorrichtung eine Tasteinrichtung mit einer Tastspitze oder auch mit einer optischen Markierung des Fokuspunkts eines Reflektors vorgesehen sein.

Dabei ist es möglich, dass dieser Taster beziehungsweise diese optische Markierung auf einen gewünschten Fokuspunkt an dem Kunststoffvorformling platziert wird.

Dabei kann ein derartiger Taster oder auch eine optische Markierung auch verwendet werden, um einen Sortenparameter beispielsweise hinsichtlich eines Fokuspunkts für einen bestimmten Kunststoffvorformling einzulernen.

Bei einer bevorzugten Ausführungsform ist die Fokussiereinrichtung gemeinsam mit dem Heizelement verstellbar. Dabei ist es möglich, dass das Heizelement mechanisch an die Fokussiereinrichtung gekoppelt ist, beispielsweise innerhalb dieser Fokussiereinrichtung angeordnet ist. Die Fokussiereinrichtung kann beispielsweise in Form einer Reflektorrinne mit fokussierender bzw. stark strahlenbündelnder Eigenschaft ausgeführt sein. Beispielsweise kann die Fokussiereinrichtung ein zumindest teilweise ellipsenförmiges Profil aufweisen, wobei die röhrenförmige Heizeinrichtung im ersten Brennpunkt der Ellipsenkontur platziert ist, sodass im zweiten Brennpunkt ein Brennpunkt mit stark gebündelter Strahlung erzeugt wird, der auf den Vorformling ausgerichtet wird.

Alternativ kann die Fokussiereinrichtung ein zumindest teilweise parabelförmiges Profil aufweisen. Dabei ist die röhrenförmige Heizeinrichtung derart in der Reflektorrinne platziert, sodass ein Bereich mit stark gebündelter Strahlung erzeugt wird, welche auf den Vorformling ausgerichtet ist.

Bei einer weiteren bevorzugten Ausführungsform ist die Fokussiereinrichtung an einem beweglichen Träger angeordnet. Besonders bevorzugt ist die Fokussiereinrichtung gemeinsam mit dem Heizelement an diesem Träger angeordnet. Daneben kann auch an diesem Trägerelement eine Abschirmeinrichtung zum Abschirmen der Heizstrahlung von den Mündungen der Behältnisse vorgesehen sein.

Bei einer weiteren bevorzugten Ausführungsform weist die Vorrichtung eine motorische Antriebseinrichtung zum Bewegen der Fokussiereinrichtung auf. Dabei kann insbesondere eine elektromotorische Antriebseinrichtung vorgesehen sein. So kann beispielsweise ein Elektromotor oder ein Linearmotor vorgesehen sein, um diese Bewegung zu bewirken. Daneben kann auch eine Antriebsmechanik, wie etwa eine Spindelmechanik vorgesehen sein, um die Fokussiereinrichtung zu bewegen.

Daneben kann auch ein Elektromotor in Form eines Linearmotors vorgesehen sein.

Zusätzlich ist es jedoch auch möglich, dass es sich bei den Antrieben um hydraulische und/oder pneumatische Antriebe handelt.

Bei einer weiteren vorteilhaften Ausführungsform weist die Vorrichtung eine Steuerungseinrichtung auf, welche eine Bewegung der Fokussiereinrichtung in Abhängigkeit von den zu erwärmenden Vorformlingen ermöglicht. So wäre es denkbar, dass diese Steuerungseinrichtung erfasst, welche Gattung an Vorformlingen erwärmt werden sollen und die Steuerungseinrichtung die Position der Fokussiereinrichtung in Abhängigkeit von dieser Gattung an Vorformlingen anpasst.

Bei einer weiteren bevorzugten Ausführungsform weist die motorische Antriebseinrichtung wenigstens zwei motorische Antriebselemente auf, die beispielsweise dazu geeignet sind, die Fokussiereinrichtung in zwei unterschiedlichen, beispielsweise zueinander senkrechten Richtungen zu bewegen. Auf diese Weise kann eine automatische Anpassung der Vorrichtung an unterschiedliche zu erwärmende Kunststoffvorformlinge vorgenommen werden. Dabei ist wie oben erwähnt das Vorsehen einer Benutzereingabe möglich, das heißt der Benutzer kann eine gewünschte Einstellung, beispielsweise über eine Bedieneinrichtung wie ein Touch-Panel eingeben.

Daneben ist jedoch auch eine vollautomatische Einstellung möglich, das heißt es kann beispielsweise erkannt werden, welche Arten von Kunststoffvorformlingen erwärmt werden sollen und entsprechend kann die Position der Fokussiereinrichtung eingestellt werden.

Bei einer weiteren bevorzugten Ausführungsform erlaubt die Antriebseinrichtung eine Bewegung der Fokussiereinrichtung in wenigstens einer Richtung und/oder eine Schwenkbewegung.

Dabei ist beispielsweise eine translatorische Bewegung möglich, beispielsweise eine translatorische Bewegung in der Längsrichtung der Kunststoffvorformlinge. Daneben ist auch eine Bewegung senkrecht zu einer Längsrichtung der Kunststoffvorformlinge möglich, durch welche ein Abstand zwischen der Fokussiereinrichtung und den zu erwärmenden Kunststoffvorformlingen geändert wird. Daneben sind auch rotatorische Bewegungen, beispielsweise Schwenkbewegungen möglich.

Schließlich kann als Antriebseinrichtung auch eine Parallelkinematik eingesetzt werden, wie unten genauer beschrieben.

Bei einer weiteren bevorzugten Ausführungsform ist die Fokussiereinrichtung mittels der Antriebseinrichtung schwenkbar bezüglich einer vorgegebenen Achse und insbesondere auch schwenkbar bezüglich einer Achse, die sich parallel beziehungsweise entlang des Transportpfads erstreckt.

Bei einer weiteren bevorzugten Ausführungsform handelt es sich bei der Transporteinrichtung um eine umlaufende Transporteinrichtung, die insbesondere eine umlaufende Transportkette oder ein umlaufendes Transportband.

Bei einer weiteren bevorzugten Ausführungsform ist die Fokussiereinrichtung eine Reflektor-Einrichtung und insbesondere eine Parabel-Reflektor-Einrichtung oder Ellipsen-Reflektor-Einrichtung. Diese Fokussiereinrichtung kann dabei besonders bevorzugt seitlich neben dem Transportpfad der Kunststoffvorformlinge angeordnet sein. Insbesondere ist die Fokussiereinrichtung nicht entlang der Bewegungsrichtung der Kunststoffvorformlinge bewegbar. Besonders bevorzugt ist die Fokussiereinrichtung in einem Arbeitsbetrieb der Vorrichtung unbeweglich.

Dabei ist es möglich, dass eine bestimmte Position der Fokussiereinrichtung festgesetzt und/oder arretiert wird.

Die vorliegende Erfindung ist weiterhin auf ein Verfahren zum Erwärmen von Kunststoffvorformlingen gerichtet, wobei eine Transporteinrichtung die Kunststoffvorformlinge entlang eines vorgegebenem Transportpfads transportiert und wenigstens eine stationär angeordnete Heizeinrichtung die entlang des Transportpfads transportierten Kunststoffvorformlinge erwärmt, wobei die Heizeinrichtung wenigstens ein Heizelement aufweist, welches die Kunststoffvorformlinge erwärmende Strahlung abgibt, sowie wenigstens eine Fokussiereinrichtung, welche die von dem Heizelement abgegebene Strahlung auf vorgegebene Bereiche der zu erwärmenden Kunststoffvorformlinge richtet und/oder fokussiert.

Erfindungsgemäß wird eine Position dieser Fokussiereinrichtung verändert. Insbesondere wird eine Position dieser Fokussiereinrichtung auch unter Berücksichtigung eines zu erwärmenden Kunststoffvorformlings verändert und insbesondere unter Berücksichtigung von dessen Geometrie.

Besonders bevorzugt richtet die Fokussiereinrichtung die erwärmende Strahlung auf einen unterhalb eines Tragrings angeordneten Bereich des Kunststoffvorformlings, insbesondere einen unmittelbar unterhalb eines Tragrings des Kunststoffvorformlings angeordneten Bereich desselben.

Durch die vorliegende Erfindung wird eine schnelle Einstellung ermöglicht und es können auch geringe Standzeiten der Maschine gewährleistet werden. Weiterhin wird eine reproduzierbare und genaue Einstellung ermöglicht. Daneben kann eine gleichbleibende hohe Qualität des Kundenprojekts erreicht werden. Daneben ist auch eine einfache Einstellung, beispielsweise an einem Bedienpanel einer Maschine denkbar oder auch automatisiert durch eine Software. Auch kann die Ergonomie der Anlage verbessert werden.

Weitere Vorteile und Ausführungsformen ergeben sich aus den beigefügten Zeichnungen:
Darin zeigen:
- Fig.1: eine erfindungsgemäße Anlage zum Herstellen von Behältnissen mit einer erfindungsgemäßen Vorrichtung;
- Fig. 2: (eine schematische Darstellung einer erfindungsgemäßen Vorrichtung);
- Fig. 3: (eine Darstellung zur Veranschaulichung der Einstellung einer Fokussiereinrichtung);
- Fig. 4: (eine weitere Darstellung einer erfindungsgemäßen Vorrichtung);
- Fig. 5: (eine Darstellung eines weiteren Bewegungsmechanismus für eine erfindungsgemäße Vorrichtung); und
- Fig. 6: (eine weitere Darstellung eines Bewegungsmechanismus für eine erfindungsgemäße Vorrichtung).

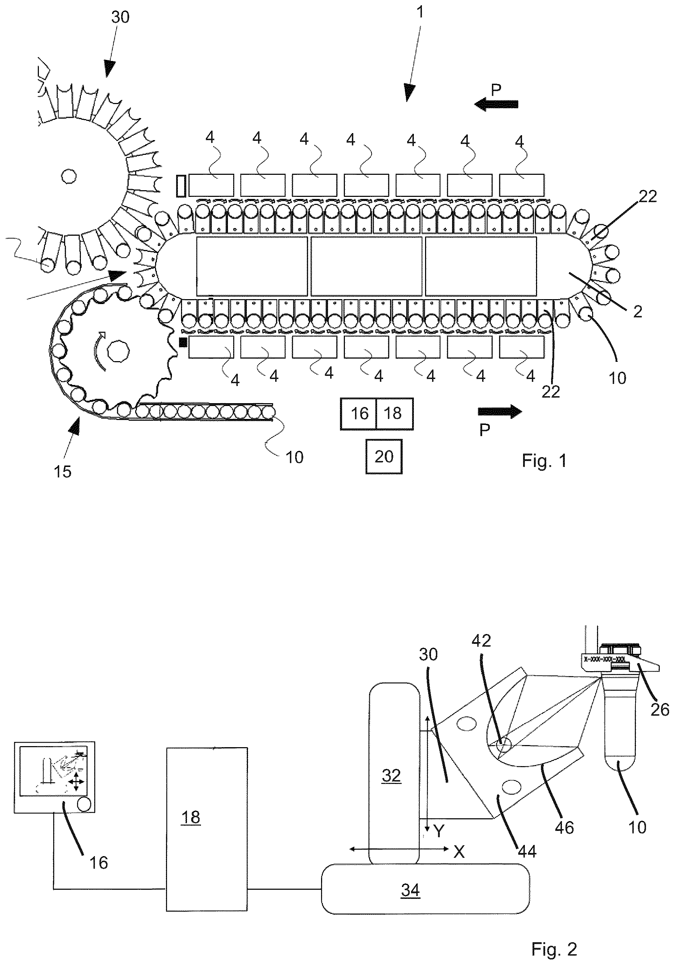

Fig. 1 zeigt eine Anlage zum Herstellen von Kunststoffbehältnissen. Dabei werden Kunststoffvorformlinge 10 über eine Vereinzelungsvorrichtung wie etwa einen Eintaktstern 15 vereinzelt und dann an eine Vorrichtung 1 zum Erwärmen übergeben. Diese Vorrichtung 1 zum Erwärmen weist eine Transporteinrichtung 2 auf, an der eine Vielzahl von Halteelementen 22 zum Halten der Kunststoffvorformlinge angeordnet ist. Die Bezugszeichen 4 kennzeichnen Heizeinrichtungen, welche hier stationär angeordnet sind, und welche Infrarotstrahlung an die an den Heizeinrichtungen vorbeitransportierten Kunststoffvorformlinge abgeben.

Die Kunststoffvorformlinge werden dabei entlang eines Transportpfads P an einer Vielzahl von stationär angeordneten Heizeinrichtungen 4 vorbei transportiert.

Nach ihrer Erwärmung werden die Kunststoffvorformlinge an eine Übergabeeinrichtung 30, wie etwa einen Teilungsverzugsstern übergeben, um von diesem wiederum an eine (nicht gezeigte) Umformungsvorrichtung zum Umformen der Kunststoffvorformlinge zu den Kunststoffbehältnissen.

Daneben kann, wie in Fig. 1 gezeigt die Vorrichtung noch eine (schematisch dargestellte) Erkennungseinrichtung 20 zum Erkennen von Kunststoffvorformlingen aufweisen. Anhand der von dieser Erkennungseinrichtung aufgenommenen Daten kann eine Ansteuerung der Fokussiereinrichtung 44 (Fig. 2) erreicht werden beziehungsweise eine Nachführung deren Bewegung.

Das Bezugszeichen 16 kennzeichnet eine Eingabeeinrichtung, mittels derer der Benutzer Eingaben an die Vorrichtung eingeben kann. So könnte der Benutzer etwa über die Eingabeeinrichtung angeben, welche Kunststoffvorformlinge erwärmt werden sollen und die Steuerungseinrichtung 18 kann daraufhin eine Einstellung der Fokussiereinrichtung vornehmen.

Fig. 2 zeigt eine detailliertere Darstellung der erfindungsgemäßen Vorrichtung. Hier ist ein Kunststoffvorformling 10 gezeigt, sowie eine Abschirmeinrichtung 26, welche Wärmestrahlung von einem Gewindebereich dieses Kunststoffvorformlings abhalten soll. Das Bezugszeichen 42 kennzeichnet ein Heizelement, insbesondere einen Heizstrahler, der innerhalb eines Ellipsenreflektors 46 angeordnet ist. Das Bezugszeichen 44 kennzeichnet entsprechend die Fokussiereinrichtung in das Bezugszeichen 30 den Träger, an dem die Fokussiereinrichtung aber auch das Heizelement 42 angeordnet ist.

Dieser Träger 30 ist hier mit zwei Antriebsmotoren 32 und 34 in den in der Figur gezeigten Xund Y-Richtungen verstellbar beziehungsweise bewegbar, um die Fokussierung der Heizstrahler auf den Kunststoffvorformling zu positionieren.

Das Bezugszeichen 18 kennzeichnet eine Steuerungseinrichtung in Form Maschinensteuerung, die zum Ansteuern der Antriebseinrichtungen 32 und 34 dient. So kann etwa über eine Benutzervorgabe eine Verstellung der Antriebseinrichtung beziehungsweise des Trägers 30 erfolgen.

Das Bezugszeichen 16 kennzeichnet die Eingabeeinrichtung, wie etwa ein Bedienpanel, durch welches der Benutzer neben der oder alternativ zu der Gattung der Vorformling eine Positionierung der Fokussiereinrichtung eingeben kann. Diese Eingabeeinrichtung weist dabei besonders auch bevorzugt auch ein Display auf, auf dem der Benutzer der Fokussiereinrichtung und deren Bewegung angezeigt wird.

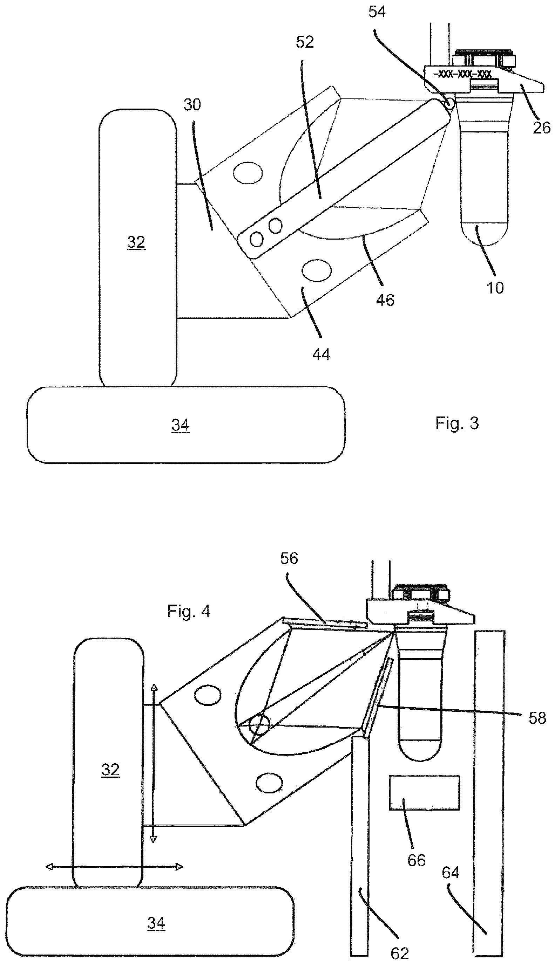

Fig. 3 zeigt eine Darstellung zur Durchführung einer Einstellung der Fokussiereinrichtung. Dabei ist eine hier abnehmbar oder auch festmontierbare Einstellvorrichtung 52 vorgesehen. Diese weist hier eine Tastspitze 54 auf, welche bevorzugt mit einem Fokus der Fokussiereinrichtung, beispielsweise dem Brennpunkt eines Ellipsenreflektors übereinstimmt. Diese Tastspitze kann dabei an den Kunststoffvorformling 10 geführt werden, um eine genaue Positionierung desselben vorzunehmen.

Fig. 4 zeigt eine weitere Darstellung einer erfindungsgemäßen Vorrichtung. Neben der Fokussiereinrichtung sind hier auch Abschirmblenden 56 und 58 vorgesehen, die verhindern, dass Strahlung auf andere Bereiche des Kunststoffvorformlings, wie etwa dessen Mündungsbereich gelangt.

Die Bezugszeichen 62 und 64 kennzeichnen jeweils eine Kachel sowie eine Gegenkachel, die wiederum zum Reflektieren von Strahlung auf den Kunststoffvorformling dient. Das Bezugszeichen 66 kennzeichnet eine Bodenkachel, die zum Abstrahlen, beziehungsweise Reflektieren von Wärme auf den Bodenbereich des Kunststoffvorformlings dient.

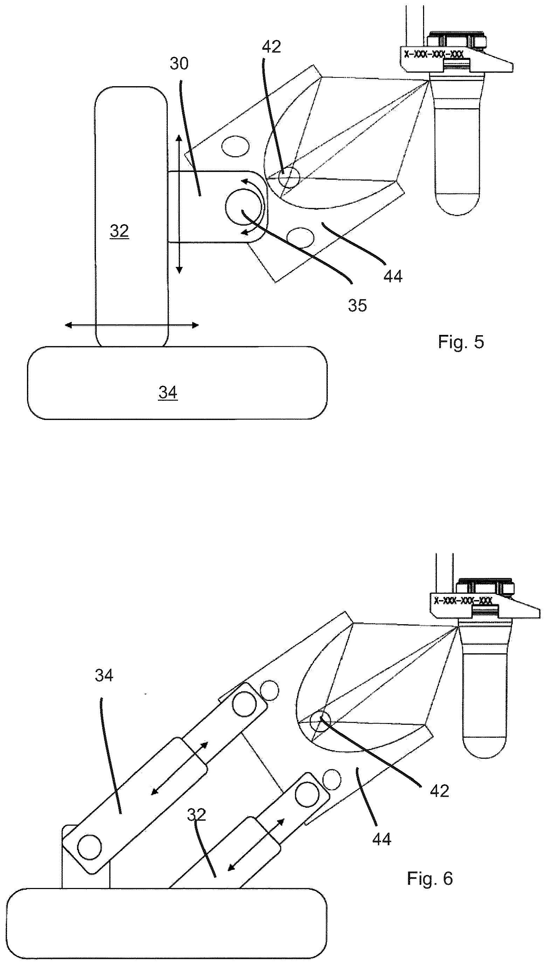

Fig. 5 zeigt eine weitere Darstellung, die eine Bewegung der Fokussiereinrichtung zeigt. Neben den beiden Antriebseinrichtungen 32 und 34 ist hier auch eine rotatorische Antriebseinrichtung 35 dargestellt, welche ein Schwenken der Fokussiereinrichtung ermöglicht, um so dessen Positionierung zu erleichtern.

Bei der in Fig. 6 gezeigten Darstellung ist eine Parallelkinematik aus zwei Antrieben 32 und 34 vorgesehen, die ebenfalls eine Positionierung der Fokussiereinrichtung 44 mit dem Heizelement 42 ermöglicht.

### Bezugszeichenliste

- 1: Vorrichtung
- 2: Transporteinrichtung
- 4: Heizeinrichtung
- 10: Kunststoffvorformling
- 15: Eintaktstern
- 16: Eingabeeinrichtung
- 18: Steuerungseinrichtung
- 20: Erkennungseinrichtung
- 22: Halteeinrichtung
- 26: Abschirmeinrichtung
- 30: Träger
- 32, 34: Antriebseinrichtung
- 35: Antriebseinrichtung
- 42: Heizelement
- 44: Fokussiereinrichtung
- 46: Ellipsenreflektor
- 52: Einstellvorrichtung
- 54: Tastspitze
- 56, 58: Abschirmblenden
- 62, 64: Kachel
- 66: Bodenkachel
- P: Transportpfad

## Patentansprüche

1. Vorrichtung (1) zum Erwärmen von Kunststoffvorformlingen (10) mit einer Transporteinrichtung (2), welche dazu geeignet und bestimmt ist, die Kunststoffvorformlinge entlang eines vorgegebenen Transportpfads (P) zu transportieren, mit wenigstens einer stationär angeordneten Heizeinrichtung (4) welche die entlang des Transportpfads (P) transportierten Kunststoffvorformlinge erwärmt, wobei die Heizeinrichtung wenigstens ein Heizelement (42) aufweist, welche die Kunststoffvorformlinge (10) erwärmende Strahlung abgibt sowie wenigstens eine Fokussiereinrichtung (44), welche die von dem Heizelement abgegebene Strahlung auf vorgegebene Bereich der zu erwärmenden Kunststoffvorformlinge fokussiert,
**dadurch gekennzeichnet, dass**
eine Position dieser Fokussiereinrichtung veränderbar ist und die Fokussiereinrichtung eine Parabelreflektoreinrichtung oder Ellipsenreflektoreinrichtung aufweist.

2. Vorrichtung (1) nach Anspruch 1,
**dadurch gekennzeichnet, dass**
die Fokussiereinrichtung (44) gemeinsam mit dem Heizelement (42) verstellbar ist.

3. Vorrichtung (1) nach wenigstens einem der vorangegangenen Ansprüche,
**dadurch gekennzeichnet, dass**
die Fokussiereinrichtung (44) an einem beweglichen Träger (30) angeordnet ist.

4. Vorrichtung (1) nach wenigstens einem der vorangegangenen Ansprüche,
**dadurch gekennzeichnet, dass**
die Vorrichtung eine insbesondere motorische Antriebseinrichtung zum Bewegen der Fokussiereinrichtung aufweist.

5. Vorrichtung (1) nach wenigstens einem der vorangegangenen Ansprüche,
**dadurch gekennzeichnet, dass**
die Vorrichtung eine Steuerungseinrichtung aufweist, welche eine Bewegung der Fokussiereinrichtung in Abhängigkeit von den zu erwärmenden Vorformlingen ermöglicht.

6. Vorrichtung (1) nach Anspruch 4,
**dadurch gekennzeichnet, dass**
die Antriebseinrichtung eine Bewegung der Fokussiereinrichtung in wenigstens einer Richtung und/oder eine Schwenkbewegung ermöglicht.

7. Vorrichtung (1) nach wenigstens einem der vorangegangenen Ansprüche,
**dadurch gekennzeichnet, dass**
die Transporteinrichtung eine umlaufende Transportkette oder ein umlaufendes Transportband aufweist.

8. Verfahren zum Erwärmen von Kunststoffvorformlingen (10) wobei eine Transporteinrichtung (2) die Kunststoffvorformlinge entlang eines vorgegebenen Transportpfads (P) transportiert, und wenigstens eine stationär angeordnete Heizeinrichtung (4) die entlang des Transportpfads (P) transportierten Kunststoffvorformlinge (10) erwärmt, wobei die Heizeinrichtung wenigstens ein Heizelement (42) aufweist, welche die Kunststoffvorformlinge (10) erwärmende Strahlung abgibt sowie wenigstens eine Fokussiereinrichtung (44), welche die von dem Heizelement abgegebene Strahlung auf vorgegebene Bereich der zu erwärmenden Kunststoffvorformlinge fokussiert,
**dadurch gekennzeichnet, dass**
eine Position dieser Fokussiereinrichtung verändert wird und die Fokussiereinrichtung eine Parabelreflektoreinrichtung oder Ellipsenreflektoreinrichtung aufweist.

9. Verfahren nach Anspruch 8,
**dadurch gekennzeichnet, dass**
die Position der Erwärmungseinrichtung unter Berücksichtigung eines zu erwärmenden Kunststoffvorformlings verändert wird.

## Claims

1. Apparatus (1) for heating plastic preforms (10) with a transport device (2) which is suitable and intended for transporting the plastic preforms along a predetermined transport path (P), with at least one stationary arranged heating device (4) which heats the plastic preforms transported along the transport path (P), wherein the heating device has at least one heating element (42) which emits radiation which heats the plastic preforms (10), and at least one focusing device (44) which focuses the radiation emitted by the heating element onto predetermined regions of the plastic preforms to be heated,
**characterized in that**
a position of this focusing device is changeable and the focusing device comprises a parabolic reflector device or elliptical reflector device.

2. Apparatus (1) according to claim 1,
**characterized in that**
the focusing device (44) is adjustable together with the heating element (42).

3. Apparatus (1) according to at least one of the preceding claims,
**characterized in that**
the focusing device (44) is arranged on a movable carrier (30).

4. Apparatus (1) according to at least one of the preceding claims,
**characterized in that**
the apparatus has an in particular motorised drive device, for moving the focusing device.

5. Apparatus (1) according to at least one of the preceding claims,
**characterized in that**
the apparatus has a control device which enables the focusing device to be moved as a function of the preforms to be heated.

6. Apparatus (1) according to claim 4,
**characterized in that**
drive device enables a movement of the focusing device in at least one direction and/or a pivoting movement.

7. Apparatus (1) according to at least one of the preceding claims,
**characterized in that**
the transport device has a circulating transport chain or a circulating transport belt.

8. Method for heating plastic preforms (10), wherein a transport device (2) transports the plastic preforms along a predetermined transport path (P), and at least one stationary arranged heating device (4) heats the plastic preforms (10) transported along the transport path (P), wherein the heating device has at least one heating element (42) which emits radiation which heats the plastic preforms (10), and at least one focusing device (44) which focuses the radiation emitted by the heating element onto predetermined regions of the plastic preforms to be heated,
**characterized in that**
a position of this focusing device is changed and the focusing device comprises a parabolic reflector device or elliptical reflector device.

9. The method according to claim 8,
**characterized in that**
the position of the heating device is changed taking into account a plastic preform to be heated.

## Revendications

1. Dispositif (1) de chauffage de préformes en matière plastique (10) avec un dispositif de transport (2) qui est conçu et destiné à transporter les préformes en matière plastique le long d'un trajet de transport (P) prédéfini, avec au moins un dispositif de chauffage (4) agencé de manière stationnaire qui chauffe les préformes en matière plastique transportées le long du trajet de transport (P), dans lequel le dispositif de chauffage présente au moins un élément chauffant (42) qui émet un rayonnement chauffant les préformes en matière plastique (10) ainsi qu'au moins un dispositif de mise au point (44) qui met au point le rayonnement émis par l'élément chauffant sur une zone prédéfinie des préformes en matière plastique à chauffer,
**caractérisé en ce que**
une position de ce dispositif de mise au point est modifiable et le dispositif de mise au point présente un dispositif à réflecteur parabolique ou un dispositif à réflecteur elliptique.

2. Dispositif (1) selon la revendication 1,
**caractérisé en ce que**
le dispositif de mise au point (44) est réglable conjointement avec l'élément chauffant (42).

3. Dispositif (1) selon au moins l'une quelconque des revendications précédentes,
**caractérisé en ce que**
le dispositif de mise au point (44) est agencé au niveau d'un support (30) mobile.

4. Dispositif (1) selon au moins l'une quelconque des revendications précédentes,
**caractérisé en ce que**
le dispositif présente un dispositif d'entraînement en particulier motorisé pour le déplacement du dispositif de mise au point.

5. Dispositif (1) selon au moins l'une quelconque des revendications précédentes,
**caractérisé en ce que**
le dispositif présente un dispositif de commande qui permet un mouvement du dispositif de mise au point en fonction des préformes à chauffer.

6. Dispositif (1) selon la revendication 4,
**caractérisé en ce que**
le dispositif d'entraînement permet un mouvement du dispositif de mise au point dans au moins un sens et/ou un mouvement de pivotement.

7. Dispositif (1) selon au moins l'une quelconque des revendications précédentes,
**caractérisé en ce que**
le dispositif de transport présente une chaîne de transport tournante ou une bande de transport tournante.

8. Procédé de chauffage de préformes en matière plastique (10), dans lequel un dispositif de transport (2) transporte les préformes en matière plastique le long d'un trajet de transport (P) prédéfini, et au moins un dispositif de chauffage (4) agencé de manière stationnaire chauffe les préformes en matière plastique (10) transportées le long du trajet de transport (P), dans lequel le dispositif de chauffage présente au moins un élément chauffant (42) qui émet un rayonnement chauffant les préformes en matière plastique (10) ainsi qu'au moins un dispositif de mise au point (44) qui met au point le rayonnement émis par l'élément chauffant sur la zone prédéfinie des préformes en matière plastique à chauffer,
**caractérisé en ce que**
une position de ce dispositif de mise au point est modifiée et le dispositif de mise au point présente un dispositif à réflecteur parabolique ou un dispositif à réflecteur elliptique.

9. Procédé selon la revendication 8,
**caractérisé en ce que**
la position du dispositif de chauffage est modifiée en tenant compte d'une préforme en matière plastique à chauffer.
